# FASCICULE DE BREVET EUROPEEN

(11) **EP 1 741 370 B1**
(45) Date de publication et mention de la délivrance du brevet: **07.01.2009**
(21) Numéro de dépôt: 06291129.2
(22) Date de dépôt: 07.07.2006
(51) Int. Cl.: A47J 27/14, A47J 37/12

(54) **Dispositif de cuisson du type sauteuse-braisière parallélipipédique équipé de moyens de brassage du contenu**
Kochvorrichtung mit quaderförmigem Wannenboden und Rührmittel
Parallelepipedic water bath cooking device with stirring means

(30) Priorité: 08.07.2005 FR 0507315
(43) Date de publication de la demande: 10.01.2007
(73) Titulaire: Rosinox, 18000 Bourges (FR)
(72) Inventeur: Comte, Dominique, 18570 Morthomiers (FR); Chiessi, Angelo, 18000 Bourges (FR)
(74) Mandataire: Fosse, Danièle

(56) Documents cités:
- DE-A1- 3 905 990
- DE-C- 937 007
- US-A- 5 664 484
- US-A1- 2001 029 846
- PATENT ABSTRACTS OF JAPAN vol. 2000, no. 23, 10 février 2001 (2001-02-10) & JP 2001 169931 A (NIHON CHORIKI), 26 juin 2001 (2001-06-26)

## Description

La présente invention concerne un dispositif de cuisson du type sauteuse-braisière parallélipipédique, en particulier rectangulaire, équipé de moyens de brassage, adapté pour la grande cuisine.

On entend par grande cuisine les installations destinées à permettre la cuisson d'aliments en grande quantité pour des collectivités telles que des hôpitaux, des restaurants d'entreprise, des cantines ou encore des traiteurs. Les capacités sont de l'ordre de 100, 200 litres pour donner un ordre d'idées.

La présente invention vise plus particulièrement la cuisine horizontale, c'est-à-dire les contenants chauffants tels que sauteuses-braisières et marmites.

On connaît des dispositifs dits communément marmites qui présentent des cuves profondes, la plupart du temps à section circulaire. Les énergies de chauffage, généralement électrique ou à gaz, permettent de porter en température le contenu de la cuve avec toute possibilité de régulation.

Il est parfois nécessaire d'assurer un brassage au sein de la marmite de sorte à mélanger le contenu et à homogénéiser la température. Les marmites sont en effet utilisées pour la cuisson d'aliments directement en milieu liquide pâtes, soupes, purée, etc.

Un moyen connu pour effectuer un tel brassage est un arbre vertical mobile avec des pales solidaires des extrémités qui provoquent le brassage recherché.

Afin de pouvoir être efficace, les pales sont conformées pour venir à proximité immédiate de la paroi périphérique et du fond.

L'arbre peut traverser le couvercle s'il est prévu ce type de fermeture ou il peut être intégré dans ledit couvercle, ce qui n'est pas un agencement aisé à réaliser. Dans d'autres agencements, on recourt à des brasseurs amovibles. D'autres modèles possèdent un arbre vertical, lié au centre de la cuve, diminuant ainsi la surface utile du fond.

Les marmites sont généralement profondes et réservées aux usages indiqués ci avant à savoir les plats à cuisson en milieu liquide direct.

On comprendra aisément que ce type de marmite circulaire, même avec une température de fond de cuve pouvant atteindre 230°C, n'ont ni la surface, ni l'ergonomie nécessaire pour cuire des mets tels que des steaks, directement sur leur fond.

La présente invention vise spécifiquement les sauteuses-braisières.

Une sauteuse-braisière est généralement une cuve de forme parallélépipédique, en particulier rectangulaire, de plus faible profondeur qu'une marmite, généralement de 150 à 250 mm, permettant d'ailleurs un accès plus aisé au fond de ladite cuve parallélépipédique.

La sauteuse-braisière permet de faire tout ce que fait une marmite mais, comme sa dénomination l'exprime, permet également de griller, cuire, saisir et faire revenir les ingrédients alimentaires. En effet, on peut cuire dans une sauteuse-braisière directement sur son fond des aliments tels que des steaks, des steaks hachés, des omelettes et similaires, comme on le ferait dans une poêle. Dans d'autres cas, avant de faire cuire certains aliments dans une sauce, qu'il s'agisse de légumes ou de viandes, il est souvent requis de les faire sauter, on dit de les faire revenir, dans de la matière grasse, pour leur donner une couleur d'une part c'est-à-dire dorer ces aliments, mais d'autre part pour leur conférer des qualités organoleptiques particulières. Les sucs se transforment sous les effets de la haute température atteinte, ce qui modifie le goût final du mets cuisiné à partir de ces ingrédients.

Les dimensions de la surface du fond sont importantes, ce qui permet de cuire une quantité importante d'aliments directement sur son fond tels que des steaks, et de mettre une partie des mets, ceux qui sont à faire revenir, en contact direct avec la surface interne de la sauteuse-braisière, surface qui peut atteindre des températures importantes de l'ordre de 300°C, voire plus élevées. A l'opposé, lorsqu'une cuve comprend un liquide, on comprend que celui-ci ne peut pas aller au-delà de 100°C, à quelques degrés près.

Ainsi, lorsque cela est nécessaire, la sauteuse-braisière permet une cuisson, entre autre, en deux temps avec une étape de chauffe très intense d'une partie au moins des ingrédients et une étape de cuisson du mets complet avec tous ses ingrédients, en milieu liquide après adjonction des ingrédients liquides.

L'étape de chauffe intense et l'état des ingrédients ainsi revenus sont contrôlés par le cuisinier qui agit généralement directement sur les ingrédients pour éviter qu'ils n'accrochent au fond. Cette phase nécessiterait donc un raclage pour empêcher l'accrochage sur le fond. De plus, la durée de cuisson complète du mets en phase liquide peut être très longue et il est très utile que le cuisinier soit déchargé de la surveillance du contenu de la cuve de la sauteuse, pendant toute la période de cuisson pour garantir une cuisson optimale, en particulier pour éviter que ce contenu n'accroche au fond.

Il convient de préciser les interactions entre la sauteuse-braisière et les ingrédients constituant le mets, en phase liquide.

On observe que le mélange des ingrédients est pour le moins hétérogène, avec certains ingrédients très sensibles à la température. De plus, la densité du milieu n'est pas non plus identique, ce qui peut provoquer une certaine ségrégation en l'absence de brassage.

Une agitation est donc obligatoire sachant qu'une agitation avec des moyens rotatifs tels que des pales rotatives ne donnent pas satisfaction car il est impossible de provoquer une agitation sur toute la surface du fond qui est rectangulaire et on constate que cette inadéquation géométrique ne permet pas d'éviter les risques d'accrochage des mets sur le fond.

Il est à noter que l'agitation nécessaire dont il est question n'est pas suffisamment rapide pour générer un vortex susceptible d'assurer une homogénéisation. Le dispositif doit permettre de conserver aux aliments leur structure, surtout en fin de cuisson ou lorsque la durée de cuisson est longue. Le brassage doit être efficace mais relativement lent.

Un autre paramètre à prendre en compte est celui de la température. Pour diffuser les calories nécessaires à la mise en température du contenu de la cuve dans un temps donné, il faut que le fond de la sauteuse soit porté à une température importante. Le milieu étant hétérogène, la diffusion se fait difficilement et dans tous les cas essentiellement par la phase liquide qui est chargée en ingrédients. Certains des ingrédients liés à la phase liquide sont sensibles à la température et lorsque celle-ci est trop importante à proximité immédiate du fond, cela provoque une surcuisson et les ingrédients accrochent sur la surface métallique.

Ceci a des conséquences importantes sur le goût du mets final d'une part mais aussi engendre un nettoyage plus délicat de la sauteuse-braisière après utilisation d'autre part.

A l'interface mets/fond de la sauteuse-braisière, le liquide au contact, porté à haute température, subit une ébullition. La formation de bulles conduit à une montée en température du fond très importante, au droit de chaque bulle puisque l'air est isolant. Les calories ne sont plus transmises directement au liquide, ce qui est un phénomène bien connu. Cette succession de formation de bulles favorise fortement et rapidement la carbonisation de certains ingrédients qui s'accrochent à la paroi de fond. Il est donc nécessaire de pouvoir éviter cette carbonisation des ingrédients, en proposant notamment un raclage du fond. Ces constatations se retrouvent dans tous les cas, même si la température programmée est bien adaptée. Seul un raclage efficace mais délicat du fond peut éviter ces phénomènes.

Durant une cuisson au sein d'une sauteuse-braisière, avec certains ingrédients comme du riz il se forme un gâteau sur la hauteur des ingrédients et il faut aussi pouvoir le briser durant le brassage. Dans ce cas, l'obstacle à vaincre est celui de l'effort nécessaire pour assurer le déplacement des moyens de brassage.

Une sauteuse-braisière de grande cuisine doit aussi pouvoir être nettoyée de façon aisée, ne doit pas comprendre de surfaces inaccessibles, doit fonctionner en milieu humide, doit fonctionner sans graissage mécanique, doit être réalisable en matériau autorisé au contact alimentaire tel que l'acier inoxydable et doit être durable.

On connaît par le document DE 39 05 990, une friteuse comportant un récipient constitué d'une cuve dont le fond est chauffé à l'aide d'une spirale de chauffage électrique, le chauffage étant régulé à l'aide d'une commande électronique. Un racloir conformé en U et constitué d'un matériau sous forme de filet est prévu dans le récipient de sorte à évacuer vers une rainure ménagée dans le fond de la cuve, les déchets restant dans l'huile de manière à nettoyer celle-ci. Le racloir permet donc de réaliser de temps à autre, la collecte et l'enlèvement des impuretés au fond de la cuve, évitant ainsi que l'huile ne se salisse trop vite. Un tel racloir ne peut servir que lorsque la friteuse n'est pas en fonctionnement puisqu'en outre, il sert de couvercle à la rainure ménagée dans le fond de la cuve pour éviter que les déchets qui y sont enfermés ne s'échappent vers la cuve pendant le fonctionnement de la friteuse. Un tel racloir n'a donc aucune visée de brassage et d'agitation du fond pendant la cuisson puisqu'il ne sert qu'entre les « cuissons ». En outre, s'il était utilisé pour soulever et détacher des aliments, ceux-ci seraient emprisonnés dans le U et entraînés vers l'extrémité de la cuve ce qui ne conduirait pas au résultat souhaité.

La présente invention a donc pour objet un dispositif de cuisson du type sauteuse-braisière équipée de moyens de brassage, dispositif dont le fond peut être intégralement libéré lors de l'étape de cuisson à haute température, dont les moyens de brassage sont aptes à assurer le mélange délicat des ingrédients durant l'étape de cuisson et à éviter aux ingrédients de la préparation d'accrocher la surface et de brûler en assurant un raclage sur l'intégralité de la surface du fond, lesdits moyens de brassage pouvant briser la masse en cuisson, ledit dispositif étant aisément nettoyable et répondant à l'ensemble des autres contraintes énoncées ci avant.

A cet effet, l'invention concerne un dispositif de cuisson du type sauteuse-braisière selon la revendication 1.

Les moyens de brassage d'un tel dispositif présentent donc l'avantage d'éviter l'attachement et le collage des aliments sur le fond de la cuve, le racleur soulevant et détachant les aliments et ce, de manière automatique sans exiger la présence d'un personnel de cuisine. De plus, ce racleur assure également le brassage et le mélange du contenu de la cuve pour en assurer l'homogénéité.

Le dispositif de cuisson du type sauteuse-braisière selon la présente invention est maintenant décrit en détail en regard des dessins annexés qui concerne un mode de réalisation particulier, non limitatif, les figures visant :
- figure 1, une vue schématique en perspective d'un dispositif du type sauteuse-braisière selon l'invention,
- figure 2, une vue schématique en coupe longitudinale médiane du dispositif de la figure 1,
- figure 3, une vue schématique en coupe transversale du dispositif de la figure 2 suivant la ligne 3-3,
- figure 4, une vue de détail en perspective du racleur du dispositif de brassage selon la figure 1 ; et
- figure 5, une vue de détail en perspective d'un autre exemple de réalisation d'un racleur du dispositif selon l'invention.

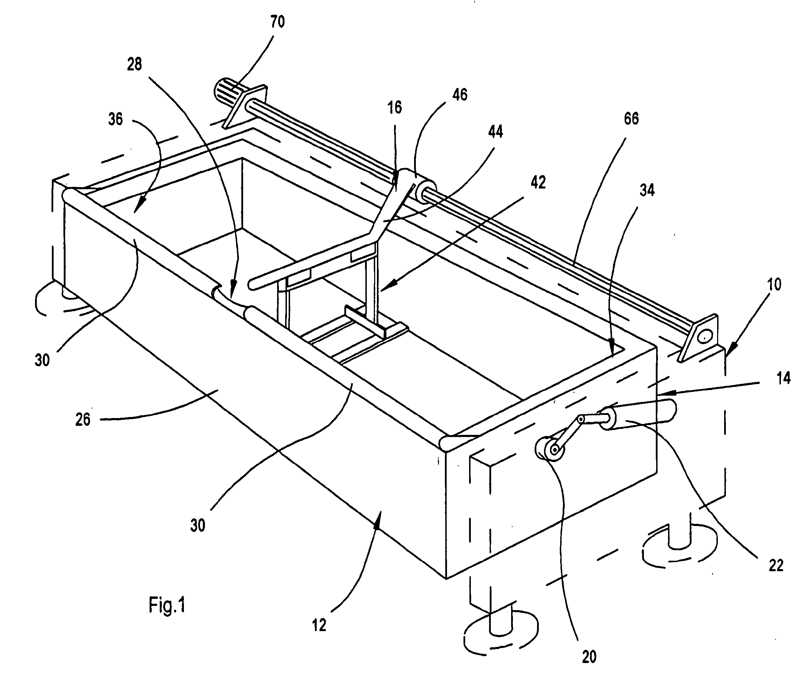

Sur la figure 1, on a représenté un dispositif du type sauteuse-braisière comportant un bâti 10, une cuve 12, des moyens 14 de basculement motorisés de ladite cuve par rapport audit bâti et des moyens 16 de brassage.

Le bâti 10 est prévu pour supporter mécaniquement la cuve 12 dans les deux positions extrêmes de basculement, cuve horizontale en position de cuisson et cuve à 90°, sensiblement verticale de sorte à permettre le vidage du contenu.

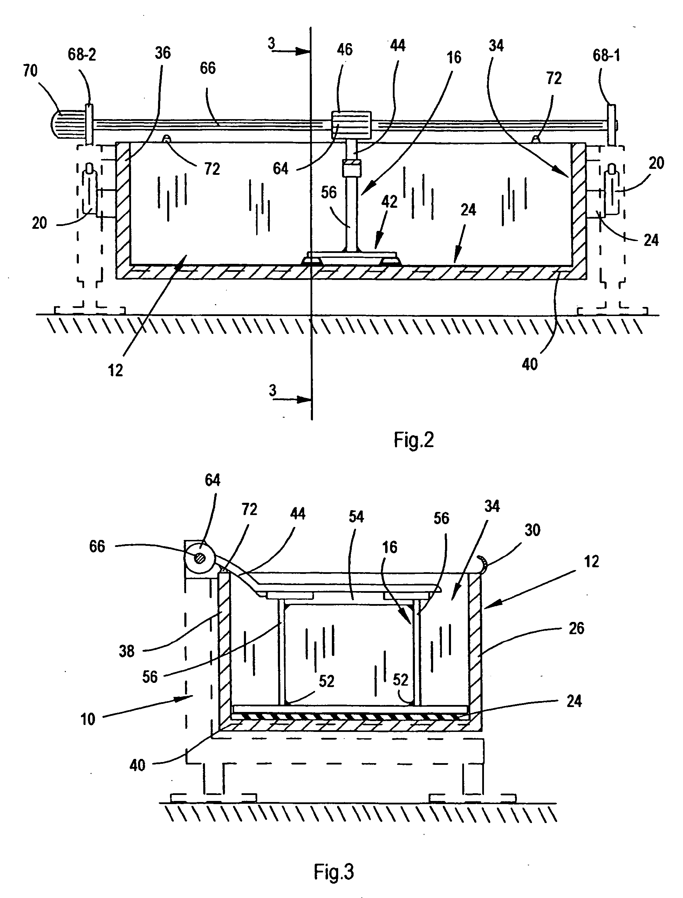

Le bâti inclut aussi les moyens 14 de basculement nécessaires, représentés sur les figures 1 et 2. De tels moyens comprennent de façon connue deux tourillons 20 solidaires des parois latérales de la cuve 12. Ces tourillons sont solidaires d'ensembles 22 bras et vérin aptes à manoeuvrer ces tourillons.

La cuve 12 est de forme parallélépipédique avec un fond 24 rectangulaire, plan. Ce fond a une épaisseur importante afin de lui conférer une forte inertie, seule apte à permettre de faire revenir les ingrédients et à obtenir les effets recherchés sur les qualités organoleptiques des aliments.

La paroi 26 avant de cette cuve comprend deux pans sur sa face intérieure de sorte à ménager un canal 28 central de vidage, ceci de façon connue. Des becs 30 de versement sont également rapportés sur le bord 32 supérieur de cette paroi avant pour faciliter ce vidage.

Les trois autres parois latérales 34, 36 et arrière 38 sont planes intérieurement.

La cuve 12 est équipée de moyens 40 de chauffage. De tels moyens de chauffage sont généralement constitués de résistances électriques ou encore de brûleurs à gaz. Le recours à un fond 24 de forte épaisseur permet de limiter la puissance nécessaire des moyens de chauffage et d'accumuler des calories ceci avec une forte inertie.

Les moyens 16 de brassage proprement dits assurant un raclage du fond comprennent un racleur 42 comprenant au moins une lame, un bras 44 et des moyens 46 de manoeuvre dudit racleur en translation horizontale alternative sur le fond 24.

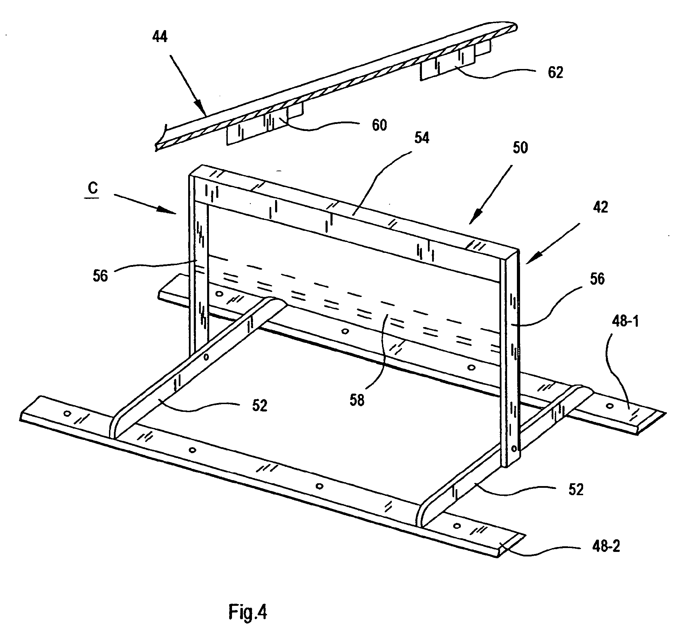

Le racleur 42 représenté sur la figure 4, comprend de façon avantageuse deux lames 48-1 et 48-2, de préférence parallèles et écartées l'une de l'autre. Ces deux lames sont solidaires d'une potence 50.

Ces lames sont planes, étroites, la surface étant parallèle au fond. La longueur de ces lames correspond à la largeur de la cuve.

De façon avantageuse, ces lames peuvent comporter des patins réalisés en un matériau de qualité alimentaire et facilitant le frottement tel que du polytétrafluoroéthylène. Ces lames présentent également des sections avec des bords biseautés de sorte à les maintenir plaquées contre le fond durant les déplacements.

L'étroitesse des lames est nécessaire pour éviter les surchauffes au passage des lames puisque tout liquide est retiré du fond.

Les deux lames sont reliées par des entretoises 52 disposées en retrait des extrémités libres de ces lames, formant ainsi un mobile, avec une symétrie, apte à se déplacer en translation alternative sur le fond de la cuve du dispositif de type sauteuse de l'invention.

La potence 50 est, dans le mode de réalisation particulier présenté, un U renversé avec un branche 54 supérieure parallèle au fond et deux branches latérales 56 verticales. Ces deux branches latérales 56 sont solidaires des entretoises 52.

Le cadre C ainsi réalisé avec la potence et les entretoises est donc de dimensions telles qu'il peut se déplacer dans le volume de la cuve, en retrait des parois latérales.

Ce cadre comporte éventuellement une lame 58 anti-gâteau, située entre les branches latérales 56, parallèlement à la branche 54 supérieure. Néanmoins, le cadre peut s'avérer suffisant.

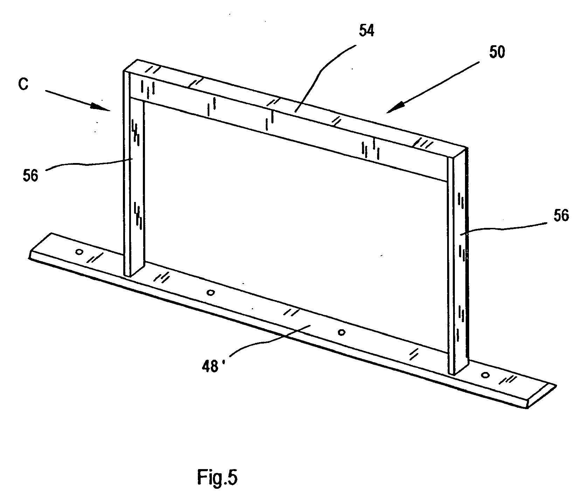

A la figure 5 est représenté un autre exemple de réalisation d'un racleur 42' du dispositif selon l'invention comportant une lame unique 48' montée sur le cadre C réalisé de manière similaire à celui décrit ci-dessus et présentant une potence 50 identique, à laquelle la lame unique 48' est reliée. Cette lame 48' peut être du même type que les lames 48-1 et 48-2 décrites ci-dessus.

Dans le mode de réalisation, les moyens 46 de manoeuvre comprennent le bras 44 avec des chapes 60, 62 solidaires de ce bras et aptes à venir coopérer par emboîtement avec la branche 54 supérieure.

Ce bras 44 est solidaire d'une tête 64 montée sur un arbre 66 tournant, rapporté entre deux paliers 68-1 et 68-2, entraîné par une motorisation 70. Les deux paliers sont solidaires du châssis.

La motorisation assure une mise en rotation dans les deux sens, à vitesse constante, éventuellement à différentes valeurs de vitesses.

La tête 64 est équipée de roulements obliques, non représentés, en prise directe sur l'arbre 66 tournant et des capteurs 72 de fin de course. Ces roulements obliques peuvent entraîner ladite tête dans un sens ou dans l'autre le long de l'arbre 66 tournant, les capteurs 72 de fin de course assurant le changement de sens.

La tête est avantageusement munie de joints pour assurer l'étanchéité sur l'arbre et éviter la pénétration de particules dans ladite tête ce qui rend le mécanisme inerte vis-à-vis des aliments cuisinés et insensibles aux produits de lavage et de désinfection utilisés pour l'entretien.

Le fonctionnement du dispositif de cuisson de type sauteuse selon la présente invention est décrit à travers ses possibilités complètes.

Ainsi, dans le cas de la préparation d'un ragoût, il convient de faire revenir de la viande dans un peu de matière grasse.

Le dispositif est donc mis à chauffer et le fond 24 atteint une température importante de l'ordre de 300°C. Ce fond étant de préférence épais, les calories sont accumulées si bien que lorsque le cuisinier introduit les morceaux de viande dans la cuve, le contact avec le fond permet de faire revenir cette viande sans que la température du fond baisse de façon importante au contact des morceaux de viande froide. En effet, en cas de peu d'inertie, la température baisserait rapidement et on n'obtiendrait pas l'effet viande rôtie.

Les morceaux de viande sont remués éventuellement manuellement pendant quelques instants puis ils sont retirés de la cuve ou laissés à l'intérieur tandis qu'une partie des autres ingrédients au moins du ragoût sont ajoutés dans la cuve et notamment la phase liquide.

Pour simplifier, la succession des ajouts d'ingrédients n'est pas décrite car elle n'apporte pas à la description du fonctionnement.

Dès l'introduction de la phase liquide, l'interface entre le fond et la phase liquide devient une zone délicate et il faut rapidement brasser le contenu hétérogène ainsi réalisé.

A cet effet, le mobile constitué des lames 48-1 et 48-2, des entretoises 52, des branches 56 et de la branche 54 est introduit dans la préparation. Le bras 44 est abaissé par rotation de la tête 64 autour de l'arbre 66.

Le bras est abaissé jusqu'à ce que les chapes 60, 62 viennent s'emboîter sur la branche 54.

Les moyens de manoeuvre sont mis en service par mise en marche du moteur 70. La vitesse est choisie lorsque cela est rendu possible par la commande dudit moteur.

La tête est alors mise en déplacement en translation le long de l'arbre 66 par les roulements obliques qui roulent sur l'arbre en rotation, du fait de leurs inclinaisons par rapport à cet arbre.

Lorsque la tête arrive en position de détection d'un côté ou de l'autre, le capteur 72 provoque l'inversion du sens de rotation du moteur si bien que la tête 64 se déplace dans le sens inverse entraînant le mobile et donc les lames 48-1 et 48-2 sur le fond.

La ou les lames en plus de racler le fond assurent un brassage du contenu dans la masse.

On note que la ou les lames raclent toute la surface du fond, intégralement jusqu'aux angles.

Lorsque le mets est prêt, il suffit de procéder au retrait du mobile avec ses lames en réalisant les étapes inverses.

On constate alors que la cuve est de nouveau totalement dégagée et accessible. Il est possible de procéder au basculement de la cuve. Par ailleurs, le racleur complet peut être nettoyé indépendamment, sans aucune difficulté. De même pour la cuve une fois vidée qui ne comporte aucun ustensile en son sein et qui peut être nettoyée aisément.

La sauteuse-braisière peut alors être utilisée en équipement de base sans brassage pour faire cuire des steaks par exemple.

Le bras 44 ne peut pas basculer dans la cuve 12, grâce à une géométrie adaptée, telle que représentée sur les différentes figures.

Ce bras peut aussi être soulevé car la tête 64 est libre en rotation sur l'arbre 66.

Le mode de réalisation décrit est avantageux car il est extrêmement simple à entretenir, à mettre en place, à retirer et son fonctionnement, y compris dans un mélange hétérogène compact comme du riz, reste efficace.

Il est possible de prévoir des variantes de réalisation concernant les moyens 46 d'entraînement, notamment en remplaçant le montage arbre et tête à roulements obliques par une tête mobile sur un rail avec un entraînement par courroie entre deux poulies. Dans ce cas, il faut prévoir un changement de sens des courroies.

## Revendications

1. Dispositif de cuisson du type sauteuse-braisière, équipé de moyens de brassage, adapté pour la grande cuisine, comprenant un bâti (10), une cuve (12) parallélépipédique, en particulier rectangulaire, avec un fond (24), des moyens (40) de chauffage, **caractérisé en ce qu'**il comprend des moyens (16) de brassage linéaire constitués d'un mélangeur-racleur (42, 42') assurant notamment un raclage du fond de cuve et de moyens (46) de manoeuvre de ce racleur en translation alternative sur ledit fond (24) de manière automatique, lesdits moyens de brassage étant aptes à assurer le mélange délicat des ingrédients durant l'étape de cuisson et à éviter aux ingrédients de la préparation d'accrocher la surface et de brûler en assurant un raclage sur l'intégralité de la surface du fond, lesdits moyens de brassage pouvant briser la masse en cuisson.

2. Dispositif de cuisson selon la revendication 1, **caractérisé en ce que** les moyens (46) de manoeuvre comprennent une tête (64) mobile en translation alternative munie d'un bras (44) apte à coopérer avec le racleur (42, 42') et des moyens d'entraînement de ladite tête (64).

3. Dispositif de cuisson selon la revendication 2, **caractérisé en ce que** les moyens d'entraînement de la tête (64) comprennent un arbre (66), un moteur (70) de mise en rotation de cet arbre, des roulements obliques inclus dans la tête (64) aptes à coopérer avec cet arbre (66).

4. Dispositif de cuisson selon la revendication 3, **caractérisé en ce qu'**il comprend des capteurs (72) de fin de course, disposés aux extrémités du châssis de sorte à inverser le sens de rotation de l'arbre (66).

5. Dispositif de cuisson selon la revendication 2, **caractérisé en ce que** les moyens d'entraînement de la tête (64) comprennent un rail sur lequel la tête (64) est mobile, avec un entraînement par courroie entre deux poulies.

6. Dispositif de cuisson selon l'une quelconque des revendications précédentes, **caractérisé en ce que** le mélangeur-racleur (42, 42') comprend au moins une lame (48', 48-1, 48-2).

7. Dispositif de cuisson selon la revendication 6, **caractérisé en ce que** le mélangeur-racleur (42) comprend deux lames (48-1, 48-2), de préférence parallèles, écartées l'une de l'autre, solidaires d'une potence (50) apte à coopérer avec le bras (44).

8. Dispositif de cuisson selon la revendication 7, **caractérisé en ce qu'**il comprend une potence (50) en U renversé avec un branche (54) supérieure parallèle au fond et deux branches latérales (56) verticales sur lesquelles soit la lame (48') est montée, soit des entretoises (52) reliant les deux lames (48-1, 48-2) sont solidaires.

9. Dispositif de cuisson selon les revendications 1 et 8, **caractérisé en ce que** le bras (44) porte au moins une chape (60, 62) apte à coopérer avec la branche (54) de la potence (50).

10. Dispositif de cuisson selon l'une quelconque des revendications précédentes, **caractérisé en ce que** le mélangeur- racleur (42) comprend au moins une lame (48', 48-1, 48-2) plane, étroite, la surface étant parallèle au fond et la longueur correspond à la largeur de la cuve (12).

11. Dispositif de cuisson selon la revendication 10, **caractérisé en ce que** chaque lame (48', 48-1, 48-2) comprend un patin réalisé en un matériau de qualité alimentaire et facilitant le frottement avec des bords biseautés.

12. Dispositif de cuisson selon l'une des revendications 7 à 9, **caractérisé en ce qu'**il comporte une lame anti-gâteau (58).

## Claims

1. Cooking device of the fryer/braiser type, equipped with mixing means, suitable for large kitchens, comprising a frame (10), a parallelepipedal, in particular rectangular, tank (12) with a bottom (24) and heating means (40), **characterized in that** it comprises linear mixing means consisting of a mixer/scraper (42, 42') which, in particular, scrapes the bottom of the tank, and means (46) for manoeuvring this scraper automatically to-and-fro over the said bottom (24), the said mixing means being capable of gentle mixing of the ingredients during the cooking step and of preventing the ingredients of the preparation from sticking to the surface and burning, by scraping the entire surface of the bottom, the said mixing means being able to break up the mass being cooked.

2. Cooking device according to Claim 1, **characterized in that** the manoeuvring means (46) comprise a head (64) that can move to-and-fro equipped with an arm (44) that can engage with the scraper (42, 42') and means for driving the said head (64).

3. Cooking device according to Claim 2, **characterized in that** the head (64) drive means comprise a shaft (66) and a motor (70) for rotating this shaft, oblique rolling bearings included in the head (64) being capable of engaging with this shaft (66).

4. Cooking device according to Claim 3, **characterized in that** it comprises travel limit sensors (72) located at the ends of the chassis so as to reverse the direction of rotation of the shaft (66).

5. Cooking device according to Claim 2, **characterized in that** the head (64) drive means comprise a rail on which the head (64) can move, with a belt drive between two pulleys.

6. Cooking device according to any one of the preceding claims, **characterized in that** the mixer/scraper (42, 42') comprises at least one blade (48', 48-1, 48-2).

7. Cooking device according to Claim 6, **characterized in that** the mixer/scraper (42) comprises two blades (48-1. 48-2), which are preferably parallel, spaced at a distance from each other, attached to a gantry (50) that is able to engage with the arm (44).

8. Cooking device according to Claim 7, **characterized in that** it comprises an inverted U-shaped gantry (50) with an upper branch (54) parallel to the bottom, and two vertical side branches (56) on which either the blade (48') is mounted or to which struts (52) connecting the two blades (48-1, 48-2) are attached.

9. Cooking device according to Claims I and 8, **characterized in that** the arm (44) bears at least one apron (60, 62) capable of engaging with the branch (54) of the gantry (50).

10. Cooking device according to any one of the preceding claims, **characterized in that** the mixer/scraper (42) comprises at least one flat narrow blade (48'. 48-1, 48-2), the surface being parallel to the bottom and the length corresponding to the width of the tank.

11. Cooking device according to Claim 10, **characterized in that** each blade (48', 48-1, 48-2) comprises a friction-relieving sole with bevelled edges, made of a food-grade material.

12. Cooking device according to one of Claims 7 to 9, **characterized in that** it comprises an anticaking blade (58),

## Patentansprüche

1. Garvorrichtung vom Typ Braisiere-Pfanne, ausgestattet mit Mischmitteln, geeignet für die Großküche, aufweisend ein Gestell (10), ein quaderförmiges, insbesondere rechtwinkliges, Gefäß (12) mit einem Boden (24), Heizmitteln (40), **dadurch gekennzeichnet, dass** es lineare Mischmittel (16), bestehend aus einer Misch-Rakel (42, 42'), die insbesondere ein Bodenrakeln des Gefäßes sicherstellt, und Mittel (46) zur automatischen Betätigung dieses Rakels in abwechselnder Bewegung über den Boden (24) aufweist, wobei die Mischmittel geeignet sind, um die feine Vermischung der Zutaten während der Garzeit sicherzustellen und um zu vermeiden, dass die Zutaten der Zubereitung an der Oberfläche anhängen und anbrennen, unter Sicherstellung eines Rakelns über die Gesamtheit der Oberfläche des Bodens, wobei die Mischmittel die Garmasse zerkleinern können.

2. Garvorrichtung nach Anspruch 1, **dadurch gekennzeichnet, dass** die Mittel (46) zur Betätigung einen in abwechselnde Richtung beweglichen Kopf (64) aufweist, der mit einem Arm (44) ausgestattet ist, der geeignet ist, mit dem Rakel (42, 42') und Antriebsmitteln des Kopfes (64) zusammenzuwirken.

3. Garvorrichtung nach Anspruch 2, **dadurch gekennzeichnet, dass** die Antriebsmittel des Kopfes (64) eine Welle (66), einen Motor zur Drehbetätigung dieser Welle, in dem Kopf (64) aufgenommene Schräglager, die geeignet sind, um mit der Welle (66) zusammenzuwirken, aufweist.

4. Garvorrichtung nach Anspruch 3, **dadurch gekennzeichnet, dass** sie Fahrbahnend-Sensoren (72) aufweist, die an den Enden des Rahmens angeordnet sind, um die Drehrichtung der Welle (66) umzukehren.

5. Garvorrichtung nach Anspruch 2, **dadurch gekennzeichnet, dass** die Antriebsmittel des Kopfes (64) eine Schiene aufweisen, auf der der Kopf (64) verschiebbar ist, mit einem Riemenantrieb zwischen zwei Riemenscheiben.

6. Garvorrichtung nach einem der vorhergehenden Ansprüche, **dadurch gekennzeichnet, dass** das Misch-Rakel (42, 42') wenigstens eine Lamelle (48', 48-1, 48-2) aufweist.

7. Garvorrichtung nach Anspruch 6, **dadurch gekennzeichnet, dass** das Misch-Rakel (42) zwei Lamellen (48-1, 48-2) aufweist, bevorzugt parallel, beabstandet voneinander, verbunden durch einen Träger (50), der geeignet ist, um mit dem Arm (44) zusammenzuwirken.

8. Garvorrichtung nach Anspruch 7, **dadurch gekennzeichnet, dass** sie einen Träger (50) in umgekehrter U-Form aufweist mit einem Bereich (54) oberhalb und parallel zum Boden und zwei seitlichen, vertikalen Bereichen (56), an denen entweder die Lamelle (48') montiert ist oder mit dem die Abstandshalter (52) verbunden sind, die die beiden Lamellen (48-1, 48-2) verbinden.

9. Garvorrichtung nach den Ansprüchen 1 und 8, **dadurch gekennzeichnet, dass** der Arm (44) wenigstens eine Umhüllung (60, 62) aufweist, die geeignet ist, um mit dem Bereich (54) des Trägers (50) zusammenzuwirken.

10. Garvorrichtung nach einem der vorhergehenden Ansprüche, **dadurch gekennzeichnet, dass** das Misch-Rakel (42) wenigstens eine gerade, schmale Lamelle (48', 48-1, 48-2) aufweist, deren Oberfläche parallel zum Boden verläuft und deren Länge der Länge des Gefäßes (12) entspricht.

11. Garvorrichtung nach Anspruch 10, **dadurch gekennzeichnet, dass** jede Lamelle (48', 48-1, 48-2) eine Kufe aufweist, die aus einem Material in Lebensmittelqualität hergestellt ist und die Reibung mit abgeschrägten Kanten ermöglicht bzw. erleichtert.

12. Garvorrichtung nach einem der Ansprüche 7 bis 9, **dadurch gekennzeichnet, dass** sie eine kuchenbildungsvermeidende Lamelle (58) aufweist.
